# EUROPEAN PATENT APPLICATION

(11) **EP 3 550 453 A1**
(43) Date of publication of application: **09.10.2019**
(21) Application number: 18165685.1
(22) Date of filing: 04.04.2018
(51) Int. Cl.: G06F 17/30, G06F 11/30

(54) **DIG-DAG CONSTRUCTION FOR ROOT-CAUSE ANALYSIS**

(71) Applicant: Nokia Solutions and Networks Oy, 02610 Espoo (FI)
(72) Inventor: RAYNAL, Maxime, 38610 Gières (FR)
(74) Representative: Whiting, Gary

(57) **Abstract**

An apparatus and method is described comprising: receiving data relating to one or more event data, the event data relating to changes in a state of one or more inputs between inactive and active states, wherein the received data is in the form of a data word representing said event data wherein the data word describes the activation and inactivation of the inputs of the event data; and constructing a data structure in the form of a directed interval graph-directed acyclic graph based on the data word.

## Description

### Field

The present specification relates to the construction of a directed interval graph-directed acyclic graph (DIG-DAG) of events, and also how, for example, the DIG-DAG structure can be used in a root-cause analysis of the events.

### Background

A directed interval graph (DIG) can be used to display data intervals. A DIG includes one vertex for each interval being displayed, with edges connecting pairs of vertices corresponding to intervals that intersect. A directed acyclic graph is a directed graph in which, from each vertex, there is no path composed of one or several edges to itself.

The principles of graph theory can be used to determine a root-cause leading to a given situation.

### Summary

In a first aspect, this specification describes an apparatus comprising means for: receiving data relating to one or more event data, the event data relating to changes in a state of one or more inputs between inactive and active states, wherein the received data is in the form of a data word representing said event data and wherein the data word describes the activation and inactivation of the inputs of the event data; and constructing a data structure in the form of a directed interval graph-directed acyclic graph based on the data word. The data structure may be updated each time a new event data is received.

The data word may describe time and space dependencies between the one or more event data. Alternatively, or in addition, the data word may describe a temporal sequence of the one or more event data.

In some forms, the apparatus may further comprise means for generating the data word from the received data. The apparatus may further comprise means for: constructing a directed interval graph based on the received event data; and constructing the data word based on the directed interval graph.

Constructing the data structure may be based on activation and deactivation of the inputs of the event data in the data word.

The data structure may comprise one or more nodes, each node corresponding to one of said one or more inputs of the one or more event data and having a state that is either active or inactive dependent on the state of the corresponding input of the event data, wherein the data structure comprises a root preceding all nodes, edges connecting the root to one or more nodes and edges connecting preceding nodes to succeeding nodes, wherein a node with no succeeding nodes is defined as a leaf node. Furthermore, in the event that one of said inputs of the event data changes to an inactive state, the means for constructing the data structure may be configured to change the state of all nodes in the data structure corresponding to said input to an inactive state. In the event that one of said inputs of the event data changes to an active state, the means for constructing the data structure may be configured to implement one or more of: add a new active leaf node corresponding to said input and provide an edge from each other active node from each other active node that does not have the input as a successor in the data structure to the new active node; determine whether the data structure includes inactive nodes corresponding to the input that has changed to an active state and that has no connections from preceding inactive nodes to the inactive node and, if so, the means for constructing the data structure may be configured to activate the inactive node; determine whether the data structure includes inactive nodes corresponding to the input that has changed to an active state and that has an edge extended from at least one preceding inactive node and at least one preceding active node to said inactive node and, if so, the means for constructing the data structure may be configured to: add a new active node corresponding to the input; replace each edge from an active node to the previous inactive node with an edge from the preceding active node to the new active node; and add an edge from the new active node to each node succeeding the inactive node; and determine whether the data structure includes an inactive leaf node corresponding to the input that has changed to an active state and, if so, the means for constructing the data structure may be configured to: replace each edge from all active nodes preceding the said inactive node with an edge from the respective preceding active node to the new active leaf node.

The apparatus may further comprise means for querying the data structure to retrieve one or more cascades of events leading to a specific situation.

The apparatus may further comprise means for storing statistical data regarding a sequence of event data. For example, the statistical may include how often each node within the data structure has been visited and/or how often each edge of the data structure has been visited.

The apparatus may further comprise a user interface enabling querying of the data structure.

The means may comprise: at least one processor; and at least one memory including computer program code, the at least one memory and computer program code configured to, with the at least one processor, cause the performance of the apparatus.

In a second aspect, this specification describes a method comprising: receiving data relating to one or more event data, the event data relating to changes in a state of one or more inputs between inactive and active states, wherein the received data is in the form of a data word representing said event data and wherein the data word describes the activation and inactivation of the inputs of the event data; and constructing a data structure in the form of a directed interval graph-directed acyclic graph based on the data word. In some forms, as an alternative to receiving said data in the form of a data word, the method may further comprise generating the data word from the received data. The method may comprise updating the data structure each time a new event data is received (for example, in the event that one of said inputs of the event data changes to an inactive state, the state of all nodes in the data structure corresponding to said input maybe changed to an inactive state).

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer readable medium comprising program instructions for causing an apparatus to perform at least the following: receive data relating to one or more event data, the event data relating to changes in a state of one or more inputs between inactive and active states, wherein the received data is in the form of a data word representing said event data and wherein the data word describes the activation and inactivation of the inputs of the event data; and construct a data structure in the form of a directed interval graph-directed acyclic graph based on the data word.

In an sixth aspect, this specification describes a non-transitory computer-readable medium comprising program instructions stored thereon for performing at least the following: receiving data relating to one or more event data, the event data relating to changes in a state of one or more inputs between inactive and active states, wherein the received data is in the form of a data word representing said event data and wherein the data word describes the activation and inactivation of the inputs of the event data; and constructing a data structure in the form of a directed interval graph-directed acyclic graph based on the data word.

In a seventh aspect, this specification describes an apparatus comprising: at least one processor; and at least one memory including computer program code which, when executed by the at least one processor, causes the apparatus to: receive data relating to one or more event data, the event data relating to changes in a state of one or more inputs between inactive and active states, wherein the received data is in the form of a data word representing said event data and wherein the data word describes the activation and inactivation of the inputs of the event data; and construct a data structure in the form of a directed interval graph-directed acyclic graph based on the data word.

### Brief description of the drawings

Example embodiments will now be described, by way of non-limiting examples, with reference to the following schematic drawings, in which:
FIG. 1 is a block diagram of a system in accordance with an example embodiment;
FIG. 2 is a block diagram of a system in accordance with an example embodiment;
FIG. 3 shows data generated in accordance with an example embodiment;
FIG. 4 shows a directed interval graph generated in accordance with an example embodiment;
FIG. 5 shows a data word generated in accordance with an example embodiment;
FIG. 6 shows an example data structure;
FIG. 7 shows an example data structure generated and manipulated in accordance with an example embodiment;
FIGS. 8 to 10 are flow charts showing algorithms in accordance with example embodiments;
FIGS. 11 to 15 show example manipulations of data structures in accordance with example embodiments;
FIG. 16 to 18 are block diagrams of systems in accordance with an example embodiment;
FIG. 19 is a graph demonstrating an aspect of an example use of an example embodiment;
FIG. 20 is a graph demonstrating an aspect of an example use of an example embodiment;
FIG. 21 is a block diagram of a system in accordance with an example embodiment; and
FIG 22a and 22b show tangible media, respectively a removable memory unit and a compact disc (CD) storing computer-readable code which when run by a computer perform operations according to embodiments.

### Detailed description

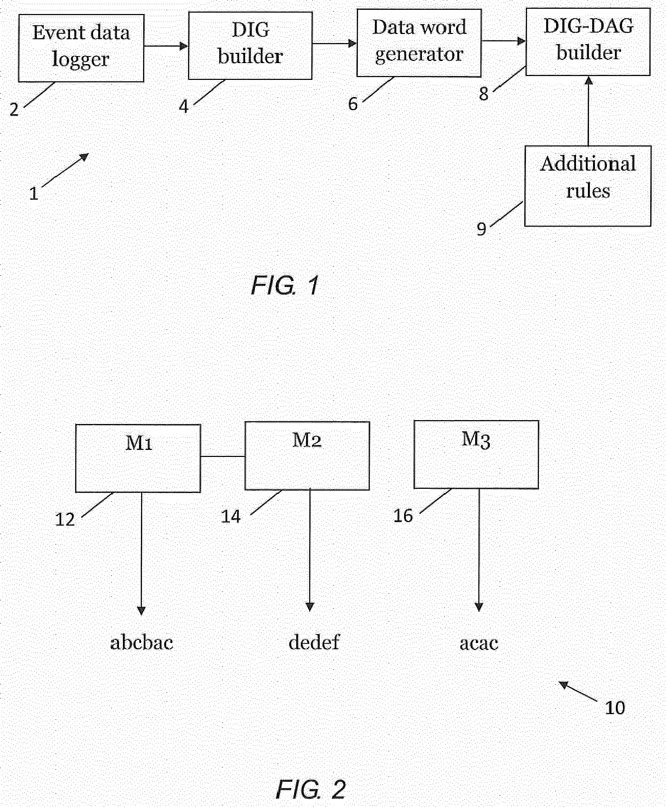

FIG. 1 is a block diagram of a system, indicated generally by the reference numeral 1, in accordance with an example embodiment. The system 1 comprises an event data logger 2, a directed interval graph (DIG) builder 4, a data word generator 6 and a directed interval graph-directed acyclic graph (DIG-DAG) builder 8.

As described in detail below, the event data logger 2 may be used to generate data relating to events (such as alarms) and provide that data to the DIG builder 4. The DIG builder generates a directed interval graph (DIG) from which a data word is generated by the data word generator 6. The DIG-DAG builder 8 generates a data structure from the generated data word that can be used, for example, for root cause data analysis, as described further below. The DIG-DAG builder 8 also makes use of various rules (indicated schematically in FIG. 1 by the input 9 labelled 'additional rules') when generating the directed acyclic graph. The input 9 is provided to the DIG-DAG builder 8.

As described in detail below, a DIG-DAG structure generated by the DIG-DAG builder 8 can be used for identifying a likely root-cause of a sequence of events (as logged by the event data logger 2). For example, it may be desired to identify a sequence of events that may have triggered a faulty behaviour, with the identified sequence of events being used to pinpoint the root cause of a problem.

FIG. 2 is a block diagram, indicated generally by the reference numeral 10, of a system in accordance with an example embodiment. The system 10 comprises a first machine 12, a second machine 14 and a third machine 16, which can be wired or wirelessly connected through the system 10 in any combination that is specific to the system 10. Each machine generates one or more events, such as error or fault messages. As shown in FIG. 2, the first machine 12 generates timestamped fault messages {a,b,c,b,a,c}, the second machine 14 generates timestamped fault messages {d,e,d,e,f} and the third machine 16 generates timestamped fault messages {a,c,a,c}. The fault messages generated in the system 10 may be logged by a data logger, such as the event data logger 2 of the system 1 described above.

In order to determine a potential root cause of a condition (such as a fault), it is helpful to understand potential dependencies between fault conditions; such dependencies may include time dependencies and space dependencies. A time dependency indicates that a second event (such as an alarm) is a potential consequence of a first event if the second event starts during the occurrence of the first event. A space dependency indicates that a second event (such as an alarm) is a potential consequence of a first event if the first and second events are emitted, for example, on the same or neighbouring machines.

Consider, for example, a set of events or alarms triggered by some hardware or software module (such as one of the machines 12, 14 and 16 described above). Each event/ alarm may be characterised by the tuple (a, s, t) or (m, a, s, t) where:
- 'm' identifies the monitored entity, i.e. the source of the event or alarm. The monitored entity may, for example, be hardware or software;
- 'a' identifies the event or alarm (e.g. an event or alarm type or description, the relevant machine etc.);
- 's' corresponds to a start time for the event/ alarm;
- t' corresponds to an end time for the event/ alarm, (such that s<t).

Consider two events:
- e=(m, a, s, t); and
- e'=(m', a', s', t')

Event e is a potential cause of e' if e and e' are spatially potentially correlated and s<s'<t.

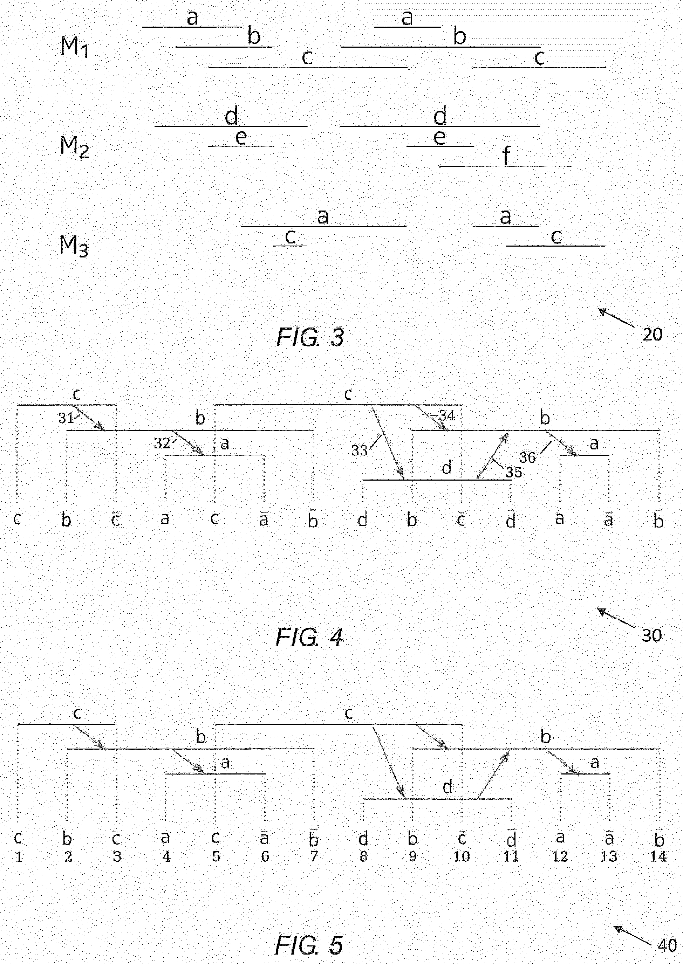

FIG. 3 shows data, indicated generally by the reference numeral 20, generated in accordance with an example embodiment. The data 20 may be the data output by the first, second and third machines 12, 14 and 16 described above. Time is shown on the horizontal axis.

As shown in FIG. 3, the first machine 12 (M₁) involves events a, b and c. Initially, only event {a} is active, then later, in sequence, the following events are simultaneously active: {a,b}, {a,b,c}, {b,c}, {c}, {c,b}, {c,b,a}, {b,a}, {b}, {b,c}, {c}.

Similarly, the second machine 14 (M₂) involves events d, e and f. The sequence of simultaneously active events shown in FIG. 3 for the second machine is: {d}, {d,e}, {d}, {}, {d}, {d,e}, {d,e,f}, {d,f}, {f}.

Finally, the third machine 16 (M₃) involves events a and c. The sequence of simultaneously active events shown in FIG. 3 for the third machine is: {a}, {a,c}, {a}, {}, {a}, {a,c}, {c}.

As shown in FIG. 1, the event data logged by the event data logger 2 is provided to the DIG builder 4. The DIG builder 4 generates a directed interval graph (DIG) from the event data, as discussed further below.

FIG. 4 shows a directed interval graph (DIG), indicated generally by the reference numeral 30, generated in accordance with an example embodiment. The DIG shows events having the following alphabet: ∑={a,b,c,d}.

As noted above, there are two potential dependencies to take into account, namely: time dependencies and space dependencies. The DIG 30 shows the temporal relationship between the events {a,b,c,d} such that time dependencies (indicating that an event is a potential consequence of another event) can be readily identified. The DIG can also be used to indicate space dependencies (based on whether events are emitted on the same or neighbouring machines).

Assume, for example, that the events 'a' and 'c' are issued by monitored entities that are not neighbours (such that the event 'a' cannot be a cause of the event 'c'). Similarly, assume that the event 'b' cannot be a cause of the event 'c' (note that, in this example, we do not assume that the spatial causality is symmetric). As shown in the DIG 30, the following dependencies are shown:
- The first instance of event 'c' may be a cause of the event 'b', as indicated by the arrow 31;
- The first instance of the event 'b' may be a cause of a first instance of the event 'a', as indicated by the arrow 32;
- The second instance of the event 'c' may be a cause of the first instance of the event 'd' or the second instance of the event 'b', as indicated by the arrows 33 and 34 respectively.
- The first instance of the event 'd' may be a cause of the second instance of the event 'b', as indicated by the arrow 35; and
- The second instance of the event 'b' may be a cause of the second instance of the event 'a', as indicated by the arrow 36.

FIG. 5 shows a data word, indicated generally by the reference numeral 40, generated in accordance with an example embodiment. The data word 40 expresses the temporal aspects of the data shown in FIG. 4. As described above, at the start of the data, an event c starts, then an event b starts and the event c ends. As indicated in FIG. 5, this is expressed by the first three bits of the data word being: *cbc̅.* Thus, as shown in FIG.5, the entire data word expressing the temporal relationships of events shown in the DIG 30 is as follows: *cbc̅aca̅b̅dbc̅d̅aa̅b̅,* wherein *x* indicates an activation or starting of an event *x* and *x̅* indicates a deactivation or ending of the event *x.* A line, relating to any of the events, describes a length of an event, with a start point of the line describing the start time of the event and an end point of the line describing the end time of the event. The locations of the lines describe related temporal occurrences of the events.

As shown in FIG. 1, the system 1 uses a DIG-DAG builder 8 to generate a directed interval graph-directed acyclic graph (DIG-DAG) from the data word output by the data word generator 6.

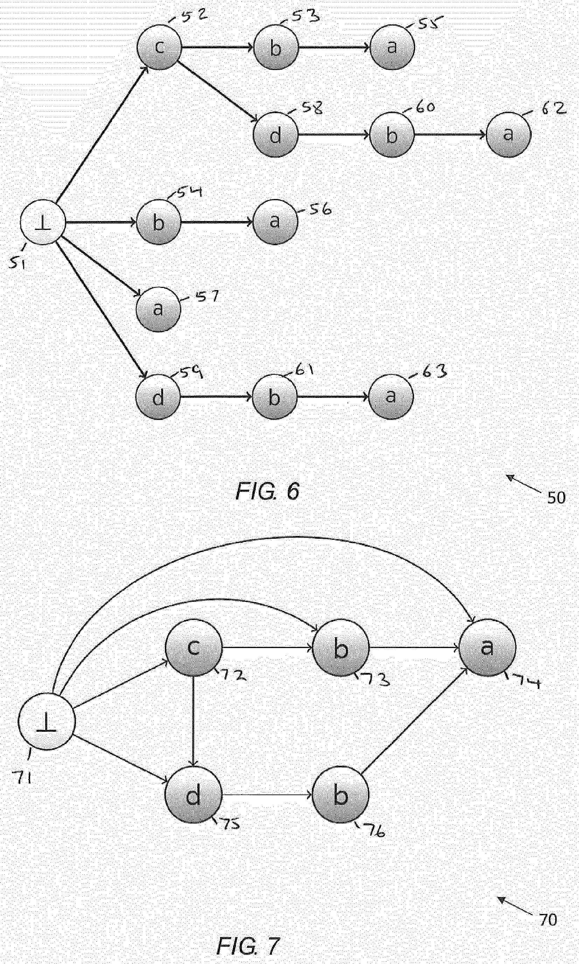

FIG. 6 shows an example non-optimised DIG-DAG structure, called a DIG-trie, indicated generally by the reference numeral 50, based on the data word *cbc̅aca̅b̅dbc̅d̅aa̅b̅.* The DIG-trie 50 is constructed from a root node 51 as follows. Before the reception of the first event, the structure is restricted to the root (that is always active node).

On receipt of the active event 'c' a first node 'c' (indicated by the reference numeral 52) is created and linked from the root node 51. Next, on receipt of the active event 'b', a first node 'b' (indicated by the reference numeral 53) is created and linked from the first node 'c' 52 and a second node 'b' (indicated by the reference numeral 54) is created and linked from the root node 51. (Note that two versions of the node 'b' are required since the event 'b' may or may not be dependent on event 'c'.) Note that created nodes are always active.

Next, on receipt of the inactivation of the event 'c' (*c̅*), the first node 'c' 52 is made inactive. Then, on receipt of the active event 'a', first, second and third nodes 'a' (indicated by the references 55, 56 and 57) are created and linked from the first node 'b' 53, the second node 'b' 54, i.e. to all active nodes, and the root node 51 respectively.

On receipt of the active event 'c', the first node 'c' 52 is reactivated. Note that new nodes 'c' are not linked to the various nodes 'a', since a is not a neighbour of c and so the combination 'ac' is not a relevant combination.

On receipt of the inactivation of the event 'a' (*a̅*), the first, second and third nodes 'a' 55, 56 and 57 are all made inactive. Similarly, on receipt of the inactivation of the event 'b' (b), the first and second nodes 'b' 53 and 54 are made inactive.

Next, on receipt of the active event 'd', a first node 'd' (indicated by the reference numeral 58) is created and linked from the first node 'c' 52 and a second node 'd' (indicated by the reference numeral 59) is created and linked from the root node 51. Note that no instances of a node 'd' is linked to the first, second or third nodes 'a', since all those nodes are inactive and so cannot be a cause of the event 'd'.

On receipt on the active event 'b', the first and second nodes 'b' 53 and 54 are both reactivated and a third node 'b' 60 and a fourth node 'b' 61 are created and linked from the first and second nodes 'd' 58 and 59 respectively. Again, there are no nodes 'd' linked to the inactive nodes 'a'.

On receipt of the inactivation of the event 'c' (*c̅*), the first node 'c' 52 is made inactive. Then, on receipt of the inactivation of the event 'd' (*d̅*), the first and second nodes 'd' 58 and 59 are made inactive.

Next, on receipt of the active event 'a', the first, second and third nodes 'a' 55, 56 and 57 are all reactivated and a fourth node 'a' 62 and a fifth node 'a' 63 (linked from the third and fourth nodes 'b' 60 and 61 respectively) are created.

Then, on receipt of the inactivation of the event 'a' (*a̅*), all of the nodes 'a' in the data structure 50 are made inactive. Finally, on receipt of the inactivation of the event 'b' (*b̅*), all of the nodes 'b' in the data structure are made inactive such that all nodes (with the exception of the root node 51) are inactive.

The data structure 50 records all of the sequences of potentially correlated events. Thus, the data structure can be interrogated to discover information about events (including likely causes of such events). However, although complete, the data structure 50 is relatively complicated. It can be seen that for a large data word, the data structure 50 would quickly become cumbersome and of limited use.

FIG. 7 shows a DIG-DAG structure, indicated generally by the reference numeral 70, based on the data word *cbc̅aca̅b̅dbc̅d̅aa̅b̅.* The DIG-DAG 70 is an optimized version of the DIG-trie 50. Before the reception of the first event, the structure is restricted to the root (that is always an active node).

On receipt of the active event 'c' a first node 'c' (indicated by the reference numeral 72) is created and linked from the root node 71. Next, on receipt of the active event 'b', a first node 'b' (indicated by the reference numeral 73) is created and linked from both the root node 71 and the first node 'c' 72. Note that, unlike in the data structure 50, a single node is generated with two edges (rather than two nodes with one edge each). Note that created nodes are always active.

Next, on receipt of the inactivation of the event 'c' (*c̅*), the first node 'c' 52 is made inactive. Then, on receipt of the active event 'a', first node 'a' (indicated by the reference numeral 74) is created and linked from the root node 71 and the first node 'b' 73. Note that the first node 'a' 73 is not linked from the first node 'c' 72, since the first node 'c' is inactive and so the new activation of the node a cannot have been caused by the (inactive) node c.

On receipt of the active event 'c', the first node 'c' 52 is reactivated. Note that new nodes 'c' are not linked to the various nodes 'a', since a is not a neighbour of c and so the combination 'ac' is not a relevant combination.

On receipt of the inactivation of the event 'a' (*a̅*), the first node 'a' 74 is made inactive. Similarly, on receipt of the inactivation of the event 'b' (*b̅*), the first node 'b' 73 is made inactive.

Next, on receipt of the active event 'd', a first node 'd' (indicated by the reference numeral 75) is created and linked from the root node 71 and from the first node 'c' 72. The first node 'b' 73 and the first node 'a' 74 are inactive and so are not linked to the first node 'd'.

On receipt on the active event 'b', the first node 'b' 73 is reactivated and a second node 'b' 76 is created and linked from the first node 'd' 75. Again, there are no nodes 'd' linked from the inactive nodes 'a'.

On receipt of the inactivation of the event 'c' (*c̅*), the first node 'c' 72 is made inactive. Then, on receipt of the inactivation of the event 'd' (*d̅*), the first node 'd' 75 is made inactive.

Next, on receipt of the active event 'a', the first node 'a' 74 is reactivated and a link is made between the second node 'b' 76 and the first node 'a' 74.

Then, on receipt of the inactivation of the event 'a' (*a̅*), the first node 'a' 74 is made inactive. Finally, on receipt of the inactivation of the event 'b' (*b̅*), the first and second nodes 'b' 73 and 76 are made inactive such that all nodes (with the exception of the root node 71) are inactive.

It is clear that the data structure 70 is significantly simpler than the data structure 50 described above. Further, it can be realized, that the link between nodes 75 (d), 76 (b) and 74 (a) is similar (or duplicate) to the link between nodes 75 (d), 73 (b) and 74 (a), so the node 76 (b) can be eliminated.

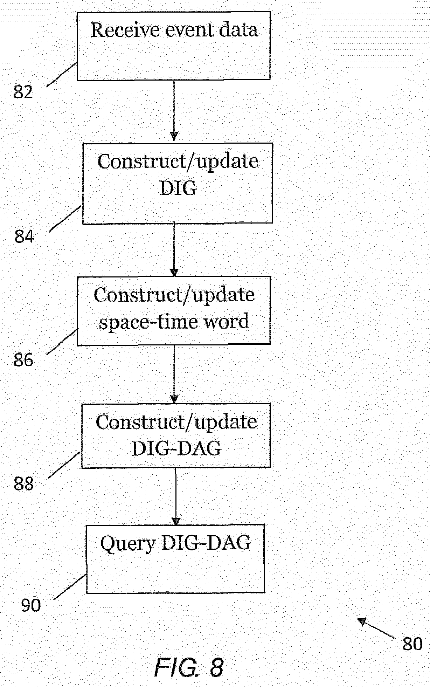

FIG. 8 is a flow chart, indicated generally by the reference numeral 80, showing an algorithm in accordance with an example embodiment.

At operation 82, event data is received. The event data may indicate that a particular event has become started or ended. In response to receiving event data, a digital interval graph (DIG) is constructed (e.g. updated) at operation 84. At operation 86, a data word (e.g. a 'space-time word') is constructed (e.g. updated) based on the DIG constructed in operation 84.

At operation 88, a DIG-DAG data structure is constructed (e.g. updated) based on the word generated at operation 86. The data structure is optimised in accordance with the principles described herein.

Once generated, the DIG-DAG structure can be queried (operation 90), as discussed further below. Indeed, the DIG-DAG structure can be queried at any time (e.g. in parallel with the constructing/updating of the DIG-DAG structure).

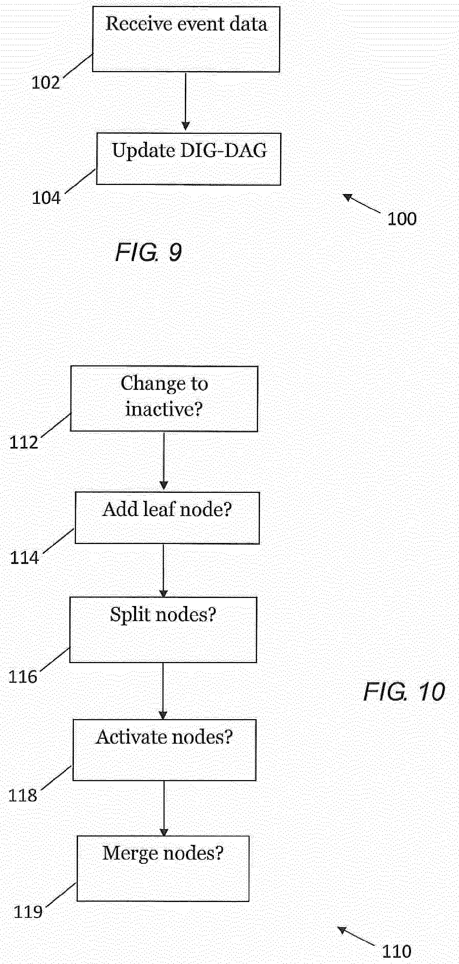

FIG. 9 is a flow chart, indicated generally by the reference numeral 100, showing an algorithm in accordance with example embodiments. The algorithm 100 starts at operation 102 where event data is received. The operation 102 is therefore similar to the operation 82 described above. In response to receive event data, the DIG-DAG structure defined above is updated at operation 104.

FIG. 10 is a flow chart, indicated generally by the reference numeral 110, showing an algorithm in accordance with example embodiments. The algorithm 110 shows a number of implementations of the update operation 104 described above. It should be noted that it is not essential for all of the operations of the algorithm 110 to be provided in the form shown in FIG. 10. For example, the merge operation 119 maybe omitted from some embodiments. Moreover, the order of at least the operations 114, 116 and 118 maybe changed.

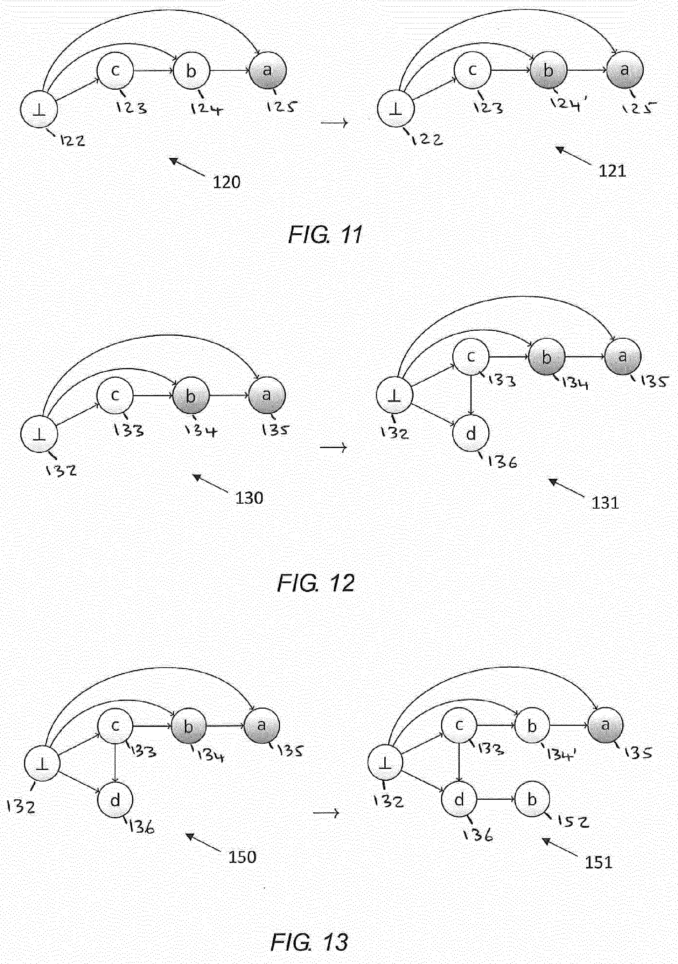

The algorithm 110 starts at operation 112 where it is determined whether any nodes within the DIG-DAG data structure should be changed to an inactive state. Such a scenario is described below with reference to FIG. 11.

At operation 114 of the algorithm 110, it is determined whether any active leaf nodes should be added to the DIG-DAG data structure. Such a scenario is described below with reference to FIG. 12.

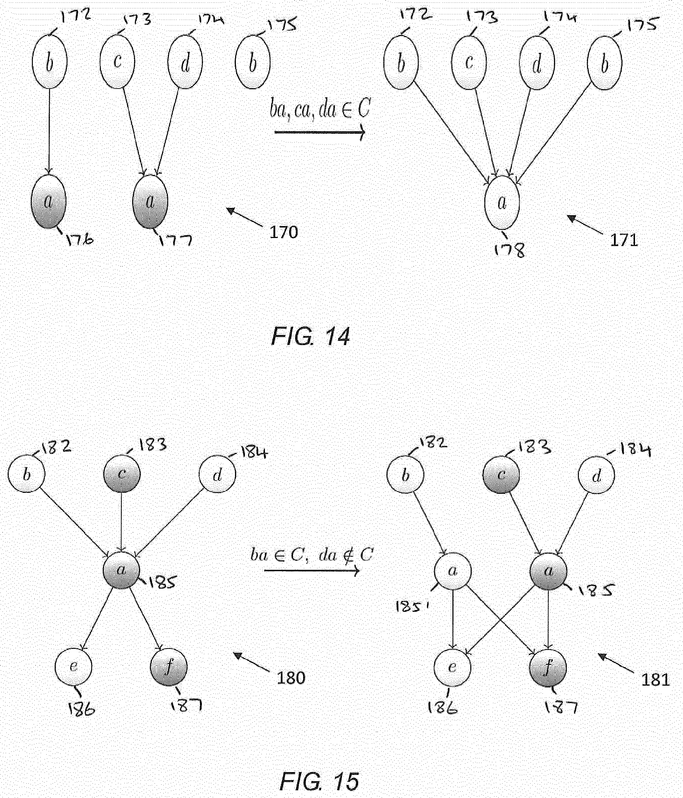

At operation 116 of the algorithm 110, it is determined whether any active non-leaf nodes of the DIG-DAG data structure should be split. Such a scenario is described below with reference to FIG. 15.

At operation 118 of the algorithm 110, it is determined whether any active nodes are required within the DIG-DAG data structure. Such a scenario is described below with reference to FIG. 13.

At operation 119 of the algorithm 110, it is determined whether any active nodes within the DIG-DAG data structure should be merged. Such a scenario is described below with reference to FIG. 14.

FIG. 11 shows a first DIG-DAG structure, indicated generally by the reference numeral 120 and a second DIG-DAG structure, indicated generally by the reference numeral 121 modified on receipt of an inactivation of the node 'b'.

The DIG-DAG structure 120 comprises a root node 122, an active node 'c' 123 connected to the root node 122, an active node 'b' 124 and an inactive node 'a' 125. On receipt of an inactivation of the node 'b', the state of the node 124 is changed to inactive (as indicated by the node 124' of the DIG-DAG structure 121).

FIG. 12 shows a first DIG-DAG structure, indicated generally by the reference numeral 130 and a second DIG-DAG structure, indicated generally by the reference numeral 131 modified on receipt of an activation of a node 'd'. The DIG-DAG structure 130 comprises a root node 132, an active node 'c' 133 connected from the root node 132, an inactive node 'b' 134 and an inactive node 'a' 135.

On receipt of an activation of the node 'd', the data structure is modified by adding a new active leaf node 136 corresponding to said input. An edge is added from each active node that is a potential spatial cause of the activated state and that is not yet connected to a node of said event. Thus, in the example DIG-DAG structure 131, edges are provided from the root node 132 and the active node 'c' 133 to the new active leaf node 136.

FIG. 13 shows a first DIG-DAG structure, indicated generally by the reference numeral 150 and a second DIG-DAG structure, indicated generally by the reference numeral 151 modified on receipt of an activation of a node 'b'.

The DIG-DAG structure 150 is identical to the DIG-DAG structure 131 described above. On receipt of an activation of the node 'b', the data structure is modified in two steps.

First, a new node 'b' 152 is added as a leaf node. The node 'd' 136 is active and the chain 'db' is a potential spatial causality and has no successor node 'b'. Thus the new node 152 is connected from the node 136. Second, the previous inactive node 'b' needs to be considered. The root 132 and the active node 'c' 133 are predecessors of the inactive node 'b' 134, are both active and 'cb' is a potential spatial causality. So the inactive node 'b' 134 is changed to an 'active' node 'b' 134'.

FIG. 14 shows a first excerpt of a DIG-DAG structure, indicated generally by the reference numeral 170 and a second excerpt of a DIG-DAG structure, indicated generally by the reference numeral 171 modified by the merge operation 119 of the algorithm 110 on receipt of an activation of a node 'a'.

The DIG-DAG structure 170 includes a first active node 'b' 172, a first active node 'c' 173, a first active node 'd' 174, a second active node 'b' 175, a first inactive node 'a' 176 and a second inactive node 'a' 177. As shown in FIG. 14, the first active node 'b' is connected to the first inactive node 'a' 176 and both the first active node 'c' 173 and the first active node 'd' 174 are connected to the second inactive node 'a' 177. Nodes 'a' 176 and 177 are leaves of the DIG-DAG structure 170.

On receipt of an activation of the node 'a', the data structure may first be modified with leaf creation, node activation and splits. If during these steps, several active leaves 'a' exist, then these active leaves are merged. Thus, in the data structure 171 a new active leaf node 'a' 178 is provided and edges from the nodes 172, 173 and 174 are moved from the inactive nodes 175 and 176 to the active node 178. The transformation shows the excerpt of the data structure including all steps.

FIG. 15 shows a first excerpt of a DIG-DAG structure, indicated generally by the reference numeral 180 and a second excerpt of a DIG-DAG structure, indicated generally by the reference numeral 181 modified by the split operation 116 of the algorithm 110 on receipt of an activation of a node 'a'.

The DIG-DAG structure 180 includes a first active node 'b' 182, a first inactive node 'c' 183, a first active node 'd' 184, a first inactive node 'a' 185, a first active node 'e' 186 and a first inactive node 'f' 187. As shown in FIG. 15, the first active node 'b' 182, the first inactive node 'c' 183 and the first active node 'd' 184 are each connected to the first inactive node 'a' 185. Further, the inactive node 'a' 185 is connected to the first active node 'e' 186 and a first inactive node 'f' 187.

On receipt of an activation of the node 'a', the data structure is modified by determining whether the data structure includes an inactive node corresponding to the input that has changed to an active state and that has an edge extended from at least one preceding inactive node or one preceding active node not being a potential causality of said inactive node to said inactive node (the inactive node 'c' 183 meets the first definition and active node 'd' 184 meets the second definition) and at least one preceding active node being a potential causality of said inactive node to said inactive node (the active node 'b' 182 meets this definition). If so, updating the data structure to: add a new active node corresponding to the input; replace each edge from an active node being a potential causality of said inactive node to the previous inactive node with an edge from the preceding active node to the new active node; and add an edge from the new active node to each node succeeding the node.

Thus, in the data structure 181, an active leaf node 'a' 185' is added and an edge from the first active node 'b' 182 is moved from the inactive nodes 185 to the active node 185'. Further, edges are added from the active leaf node 'a' 185' to the first active node 'e' 186 and the first inactive node 'f' 187. Note that no edge is added from the active leaf 'd' 184 to the new node 185' since 'd' is not a potential causality of 'a'.

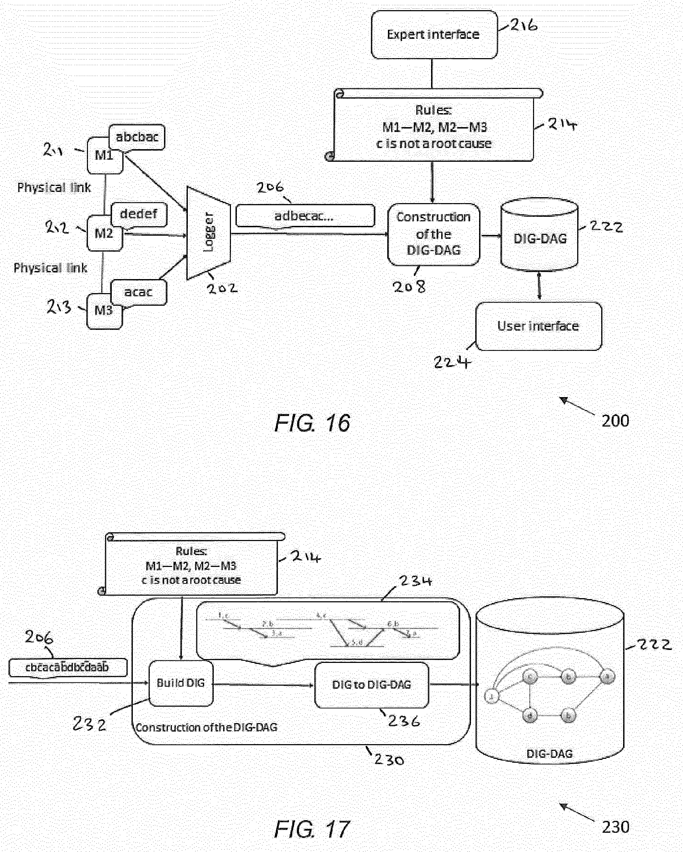

FIG. 16 is a block diagram of a system, indicated generally by the reference numeral 200, in accordance with an example embodiment. The system 200 comprises an event data logger 202 and a DIG-DAG builder 208 that are similar to the event data logger 2 and DIG-DAG builder 8 described above with reference to FIG. 1. The data logger 202 generates a data word 206 (similar to the data word generated by the data word generator 6 described above). The system 200 can, for example, analyse functions of an IoT (Internet of Things) network/ system, a wireless telecommunication system, a communication network, an apparatus, an electronic device, a mobile communication device, an industrial process, a vehicle, or any combination thereof.

The data logger 202 receives one or more inputs (such as alarm or other event data) from one or more monitored entities, such as first, second and third monitored entities/machines 211, 212 and 213 (such as the first, second and third machines 12, 14 and 16 discussed above). Each event may provide data of the form (m, d, t₀, t₁), where m is the monitored entity/machine name, d identifies an alarm (or some other event), t₀ is a start time of the alarm and t₁ is an end time the alarm. The entities/ machines 211, 212 and 213 (or 12, 14 and 16) can be, for example, a server, a computer, a network element/entity, a wireless telecommunication element/entity, a software defined entity, a computer program, a circuitry, an IoT device, a sensor device, a mobile communication device, an antenna, a transmitter, a receiver, or any combination thereof.

The DIG-DAG builder 208 may receive one or more inputs from a rules database 214. The rules database 214 may itself be populated from an expert interface 216 (such as a user interface). The one or more rules may, for example, indicate which of the monitored entities 211, 212 and 213 are neighbours, and/or some of the alarms/ events cannot be a root cause, and/or how they are connected, and/or in which order, and/or by which architecture to each other, for example, via a wired or wireless connection, or any combination thereof.

Based on the data word 206 and input from the rules database 214, the DIG-DAG builder 208 may generate a DIG-DAG data structure as described in FIGS. 6 to 15 and the related described. The DIG-DAG data structure is further stored in database 222. A user interface 224 may be provided to enable interrogation of the DIG-DAG data structure stored in the database 222. For example, the user interface 224 may enable a user to investigate potential root causes of a particular event (such as an alarm), for example by submitting a query or request to search the potential root causes of a particular alarm. For instance, if the user is looking for causes of some alarm 'a', it suffices to extract every path in the DIG-DAG towards nodes labelled by 'a'. This can be achieved by using standard graph traversal algorithms, e.g. Depth-First-Search or Breadth-First-Search. The corresponding path could possibly be ranked or filtered out by taking advantage of some node-based metrics (e.g. the number of times a node has been activated) or edge-based metrics (e.g. the number of time an edge has been reused). Another example is to directly filter the edges of the structure and keeping, using edge-based of node-based metrics those that give evidence of strong correlation. To be more specific about a precise use (not limitative), give a node 'x', its "context" is the set of paths from the root to it. For every successor 'a' of that node, compute the ratio between edge-count of'x'->'a' and root->'a'. This ratio lies between 0 and 1, and the higher the ratio, the stronger the correlation. So, a threshold can be fixed and keeping only edges with ratio higher than this threshold. The ratio is not necessarily the same for every edge and can be finely tuned.

FIG. 17 is a block diagram of a system, indicated generally by the reference numeral 230, in accordance with an example embodiment. The system 230 shows details of part of an example implementation of the system 200. The system 230 includes the data word 206, rules database 214 and database 222 described above. The system 230 shows example details of the DIG-DAG builder 230.

In the example system 230, the DIG-DAG builder 230 includes a DIG builder 232 (similar to the DIG builder 4 described above) and a DIG to DIG-DAG converter module 236. The DIG builder generates a DIG-trie 234 and the DIG to DIG-DAG converter module converts the DIG-trie 234 into the DIG-DAG data structure stored in the database 222.

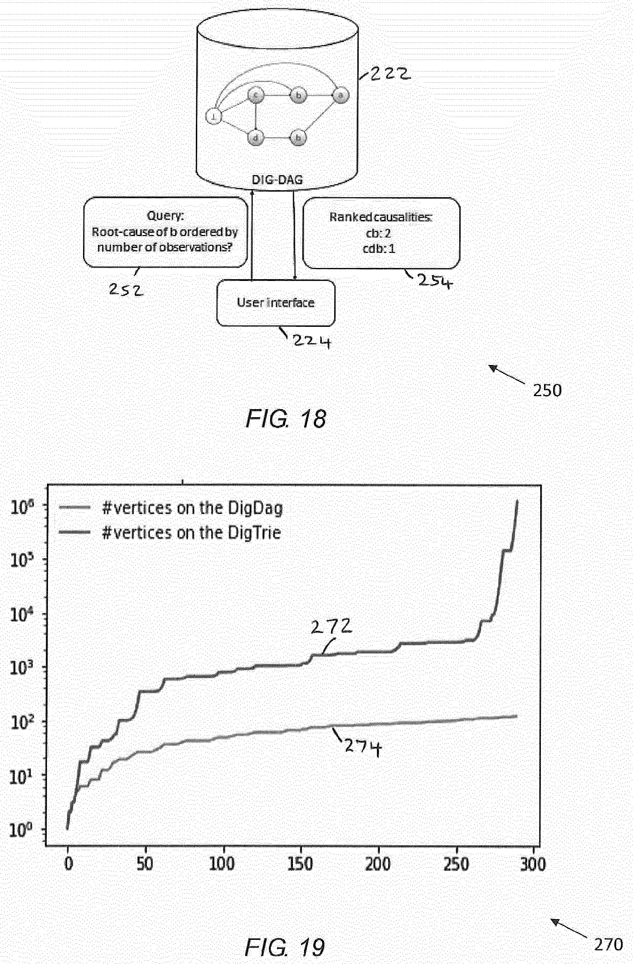

FIG. 18 is a block diagram of a system, indicated generally by the reference numeral 250, in accordance with an example embodiment. The system 250 includes the database 222 and user interface 224 described above. The system 250 shows the use of the user interface 224 to interrogate the database 222, for example in order to extract root cause information. For example, the user 224 may seek information (in message 252) regarding the likely root cause of an event 'b' ordered by the number of observations of that event. The database may return data (in message 254) providing the ranked causalities of the indicated event. The response indicates that the sequence 'cb' and 'cdb' are both potential causes of the event 'b', but that 'cb' has occurred twice as often as 'cdb'.

FIG. 19 is a graph, indicated generally by the reference numeral 270, demonstrating an aspect of an example use of an example embodiment. The graph 270 includes first data 272 plotting the number of vertices in a data structure (on the y-axis) and the number of data points, such as alarms, (on the x-axis) generated as discussed above with reference to FIG. 6. The graph 270 also includes second data 274 plotting the number of vertices in a data structure generated in accordance with an example embodiment. As shown in FIG. 19, although the number of vertices in the example data 274 increases over time, the increase is much slower than in the first data 272.

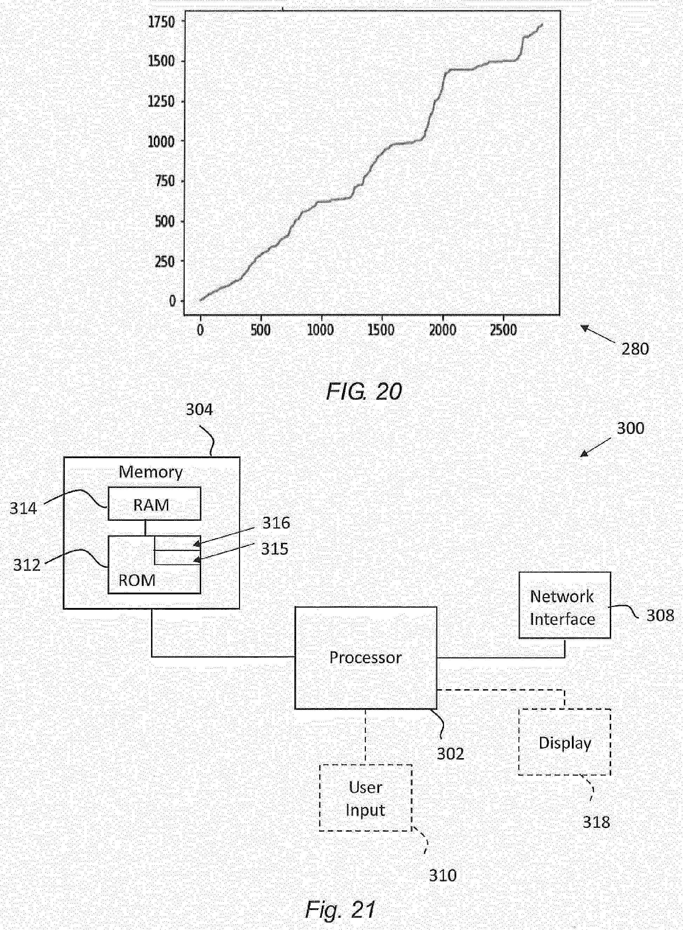

FIG. 20 is a graph, indicated generally by the reference numeral 280, demonstrating an aspect of an example use of an example embodiment. The data 280 plots the number of nodes in a data structure (on the y-axis) with the number of processed events, such as alarms, on the x-axis in accordance with an example embodiment. FIG. 20 shows that the number of nodes in the data structure increases broadly linearly with increasing data points.

For completeness, FIG. 21 is a schematic diagram of components of one or more of the modules described previously (e.g. the logger 2, 202 and/or DIG-DAG builder 8, 208), which hereafter are referred to generically as processing systems 300. A processing system 300 may have one or more processors 302, one or more memories 304 coupled to the one or more processors and comprised of one or more RAM 314 and one or more ROM 312, and, optionally, user inputs 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor, implements aspects of the algorithms 80, 100 or 110.

The processor 302 may take any suitable form. For instance, it may be a microcontroller, plural microcontrollers, a processor, or plural processors.

The processing system 300 may be a standalone computer, a server, a console, or a network thereof. The logger 2, 202 and/or DIG-DAG builder 8, 208 can be combined in the one or more processing systems 300, in any combinations thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

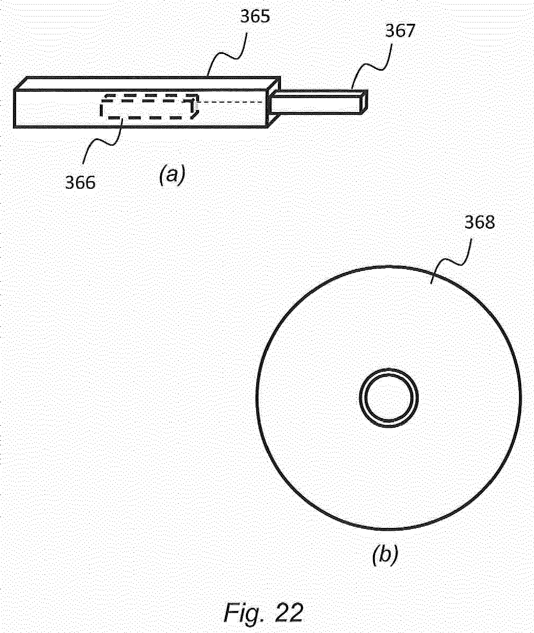

FIG. 22a and FIG. 22b show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/ software (including digital signal processor(s)), software, and memory(ies) that work together to cause an apparatus, such as a server, to perform various functions) and (c) to hardware circuit(s) and or processor(s), such as a microprocessor(s) or a portion of a microprocessor(s), that require software or firmware for operation, even if the software or firmware is not physically present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 8 to 10 are examples only and that various operations depicted therein maybe omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for:
receiving data relating to one or more event data, the event data relating to changes in a state of one or more inputs between inactive and active states, wherein the received data is in the form of a data word representing said event data and wherein the data word describes the activation and inactivation of the inputs of the event data; and
constructing a data structure in the form of a directed interval graph-directed acyclic graph based on the data word.

2. An apparatus as claimed in claim 1, wherein the data word further describes time and space dependencies between the one or more event data and/or wherein the data word further describes a temporal sequence of the one or more event data.

3. An apparatus as claimed in claim 1 or claim 2, further comprising means for:
constructing a directed interval graph based on the received event data; and
constructing the data word based on the directed interval graph.

4. An apparatus as claimed in any one of the preceding claims, wherein constructing the data structure is based on activation and deactivation of the inputs of the event data in the data word.

5. An apparatus as claimed in any one of the preceding claims, further comprising means for updating the data structure each time a new event data is received.

6. An apparatus as claimed in any one of the preceding claims, wherein the data structure comprises one or more nodes, each node corresponding to one of said one or more inputs of the one or more event data and having a state that is either active or inactive dependent on the state of the corresponding input of the event data, wherein the data structure comprises a root preceding all nodes, edges connecting the root to one or more nodes and edges connecting preceding nodes to succeeding nodes, wherein a node with no succeeding nodes is defined as a leaf node.

7. An apparatus as claimed in claim 8, wherein:
in the event that one of said inputs of the event data changes to an inactive state, the means for constructing the data structure is configured to change the state of all nodes in the data structure corresponding to said input to an inactive state.

8. An apparatus as claimed in claim 7 or claim 8, wherein, in the event that one of said inputs of the event data changes to an active state, the means for constructing the data structure is configured to implement one or more of:
add a new active leaf node corresponding to said input and provide an edge from each other active node from each other active node that does not have the input as a successor in the data structure to the new active node;
determine whether the data structure includes inactive nodes corresponding to the input that has changed to an active state and that has no connections from preceding inactive nodes to the inactive node and, if so, the means for constructing the data structure is configured to activate the inactive node;
determine whether the data structure includes inactive nodes corresponding to the input that has changed to an active state and that has an edge extended from at least one preceding inactive node and at least one preceding active node to said inactive node and, if so, the means for constructing the data structure is configured to: add a new active node corresponding to the input; replace each edge from an active node to the previous inactive node with an edge from the preceding active node to the new active node; and add an edge from the new active node to each node succeeding the inactive node; and
determine whether the data structure includes an inactive leaf node corresponding to the input that has changed to an active state and, if so, the means for constructing the data structure is configured to: replace each edge from all active nodes preceding the said inactive node with an edge from the respective preceding active node to the new active leaf node.

9. An apparatus as claimed in any one of the preceding claims, further comprising means for querying the data structure to retrieve one or more cascades of events leading to a specific situation.

10. An apparatus as claimed in any one of the preceding claims, further comprising means for storing statistical data regarding a sequence of event data.

11. An apparatus as claimed in claim 10, wherein said statistical includes how often each node within the data structure has been visited and/or how often each edge of the data structure has been visited.

12. An apparatus as claimed in any one of the preceding claims, further comprising a user interface enabling querying of the data structure.

13. An apparatus as claimed in one of the preceding claims, wherein the means comprises:
at least one processor; and
at least one memory including computer program code, the at least one memory and computer program code configured to, with the at least one processor, cause the performance of the apparatus.

14. A method comprising:
receiving data relating to one or more event data, the event data relating to changes in a state of one or more inputs between inactive and active states, wherein the received data is in the form of a data word representing said event data and wherein the data word describes the activation and inactivation of the inputs of the event data; and
constructing a data structure in the form of a directed interval graph-directed acyclic graph based on the data word.

15. A computer readable medium comprising program instructions for causing an apparatus to perform at least the following:
receiving data relating to one or more event data, the event data relating to changes in a state of one or more inputs between inactive and active states, wherein the received data is in the form of a data word representing said event data and wherein the data word describes the activation and inactivation of the inputs of the event data; and
constructing a data structure in the form of a directed interval graph-directed acyclic graph based on the data word.
